# EUROPÄISCHE PATENTSCHRIFT

(11) **EP 2 181 282 B1**
(45) Veröffentlichungstag und Bekanntmachung des Hinweises auf die Patenterteilung: **10.10.2012**
(21) Anmeldenummer: 08801232.3
(22) Anmeldetag: 28.08.2008
(51) Int. Cl.: F16K 35/10

(54) **UNIVERSALADAPTER FÜR EINE VENTILVERRIEGELUNG**
UNIVERSAL ADAPTER FOR A VALVE LOCK
ADAPTATEUR UNIVERSEL POUR UN VERROU DE SOUPAPE

(30) Priorität: 29.08.2007 DE 102007040702
(43) Veröffentlichungstag der Anmeldung: 05.05.2010
(73) Patentinhaber: Haake Technik GmbH, 48691 Vreden (DE)
(72) Erfinder: SCHOPPEN, Jens, 48703 Stadtlohn (DE)
(74) Vertreter: Habbel, Hans-Georg
(86) Internationale Anmeldenummer: PCT/DE2008/001412
(87) Internationale Veröffentlichungsnummer: WO 2009/026906

(56) Entgegenhaltungen:
- EP-A- 0 942 215
- US-A1- 2005 092 367

## Beschreibung

Die Erfindung bezieht sich auf einen Universaladapter für eine Ventilverriegelung gemäß dem Oberbegriff des Hauptanspruches.

Ventilverriegelungssysteme haben die Aufgabe, zu verhindern, dass das Ventil unbefugt betätigt werden kann, so dass eine unbefugte Veränderung des Zustandes des Ventiles ausgeschlossen ist.

Diese Verriegelungssysteme werden daher als gesondertes Bauteil zwischen das Ventil und die Ventilbetätigung eingeschaltet, wobei dieses gesonderte Bauteil im wesentlichen die Verbindungsmittel zwischen dem Ventilbetätigungsrad und der Ventilspindel besitzt.

Weiterhin haben Ventilverriegelungssysteme die Aufgabe, zu gewährleisten, dass nur eine festgelegte betriebliche Abfolge durchlaufen werden kann. Normalerweise arbeiten Ventilverriegelungssysteme mit mehreren Schlössern und Schlüsseln. Ventilverriegelungen können nur betätigt werden, wenn sich beide Schlüssel in der Verriegelung befinden (DE 699 00 370 T2). Dabei sind die Schlüssel individuell codiert. Ein Schlüssel mit falscher Codierung kann nicht in die Verriegelung eingeführt werden bzw. kann diese nicht freigeben. Die jeweiligen Schlüssel können nur entnommen werden, wenn sich das Ventil in einer bestimmten Position befindet. Ist ein Schlüssel entnommen, so ist der andere in der Verriegelung gefangen. Üblicherweise ist es so, dass der Schlüssel nur entnommen werden kann, wenn das Ventil ganz geöffnet ist und der andere Schlüssel nur entnommen werden kann, wenn das Ventil vollkommen geschlossen ist.

Ventilverriegelungssysteme für handbetätigte Ventile werden in Anpassung an die unterschiedlichsten im Einsatz befindlichen Spindelformen in verschiedenen Ausführungen benötigt. Der Regelfall ist der, dass bei diesen Verriegelungssystemen die Endlage eingestellt werden kann. Häufig werden für die Endlage die Positionen "Ventil ganz geöffnet" und "Ventil ganz geschlossen" gewählt, wobei aber auch andere Ventilpositionen möglich sind.

Die Verbindung zwischen der Ventilspindel und dem eigentlichen Schloß des Verriegelungssystems erfolgt dabei über eine Hohlwelle, die an ihrer Außenseite Zähne für eine Sperrklinke und in ihren Endbereichen Aufnahmen für Adapter aufweist, die dem Anschluß der Spindel einerseits und des Handrades oder Betätigungshebels andererseits dienen.

Ventilverriegelungssysteme werden überall dort eingesetzt, wo eine Ablauffolge für Ventile zur Erhöhung der Personen- und Anlagensicherheit beitragen. Häufig sind das Ölbohrinseln, Chemie- und Raffineriewerke, die Gasindustrie sowie die Anlagen der Kernenergie.

Die US-A-2005/092367 zeigt einen Universal adapter für den Einsatz an einer Hohlwelle zum Auschluss eines Betätigungshebels in Verbindung mit einer Ventilverriegelung.

Bisher in der Praxis bekannt gewordene Universallösungen für Adapter sind montageaufwendige Baukästen mit bis zu 54 Einzelteilen. Diese Adapter sind relativ groß und erfordern viel Zeit für die korrekte Installation. Außerdem sind nach der Installation viele Einzelteile überflüssig und müssen verworfen werden.

Diese Universaladapter werden innerhalb der Hohlwelle einer Ventilverriegelung eingesetzt und dienen einmal zur Verbindung der Ventilspindel mit der Hohlwelle und werden aber auch eingesetzt, um die Achse eines Handrades oder eines Betätigungshebels an die Hohlwelle anzuschließen. In beiden Fällen haben Universaladapter die Aufgabe, die unterschiedlichen Anschlusssysteme, wie Spindel und Betätigungsradwelle, sicher und fest zu lagern, ohne dass eine Anschlussvorrichtuhg für die jeweilige Ausführungsform der Spindel oder der Handradwelle erforderlich ist.

Hierbei soll der Universaladapter mit möglichst wenig Einzelteilen eine möglichst große Einsatzbreite aufweisen.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt wird ein Adapter vorgeschlagen, der innerhalb eines Adaptergehäuses Verstellplatten aufweist, die von außen betätigt an das Anschlussbauteil geführt werden können, beispielsweise eine Ventilspindel, wobei beiderseits des Anschlussbauteiles je zwei Platten vorgesehen sind, so dass durch Entfernen je einer Platte die große Anschlussvielfalt gewährleistet wird.

Mit anderen Worten ausgedrückt werden zwei Keilplatten durch einen Zugkeil an die Spindel gedrückt, wobei die Zugkeile durch Schrauben von der Oberseite des Adaptergehäuses betätigt werden. Hierdurch wird eine hohe Flächenpressung und Festigkeit der Konstruktion erreicht. Ein selbständiges Lösen der Schrauben ist durch diese Selbsthemmung somit unwahrscheinlich. Die in den Keilplatten vorgesehenen Aufnahmen sind unterschiedlich ausgebildet und passen sich somit an der Form der Spindel bzw. der Spindelaufnahme an.

Die Keilplatten stützen sich mit seitlichen Vorsprüngen auf Vorsprüngen innerhalb des Adaptergehäuses ab. Zwei sich parallel zur Ebene der Keilplatten erstreckende Gewindestifte können bei Bedarf eingesetzt werden und geben somit eine zusätzliche Sicherung.

Das Adaptergehäuse ist mit außen angeordneten oder ausgeformten Riegelvorsprüngen ausgerüstet, die mit entsprechenden Ausformungen in der Hohlwelle zusammenwirken können. Hierdurch wird das Adaptergehäuse verdrehfest innerhalb der Hohlwelle festgelegt. Sowohl die Zugschrauben wie auch die Gewindestifte sind mit Innensechskant ausgerüstet und können daher leicht über einen entsprechenden Betätigungsschlüssel betätigt werden. Die Zugschraube zur Betätigung des Zugkeiles greift mit einem Vorsprung in eine Lagerführung des Adaptergehäuses ein.

Schließlich wird gemäß der Erfindung vorgeschlagen, dass in den Keilplatten Bohrungen vorgesehen sind, die als zusätzliche Arretierausnehmungen dienen, beispielsweise bei Einsatz von T-förmigen Spindeln oder Handradwellen.

Ein Ausführungsbeispiel der Erfindung wird nachfolgend anhand der Zeichnungen erläutert. Die Zeichnungen zeigen dabei in
- Fig. 1: in einer auseinandergezogenen Darstellungsweise die Einsätze, die auf einer Seite eines Adaptergehäuses notwendig sind, in
- Fig. 2: eine Draufsicht auf ein Adaptergehäuse mit eingesetzten Einsätzen und in
- Fig. 3: einen Schnitt durch das Adaptergehäuse gemäß der Linie 3 - 3 in Fig. 2 und in
- Fig. 4: die unterschiedlichsten Anschlussmöglichkeiten bei Einsatz des neuen erfindungsgemäßen Universaladapters.

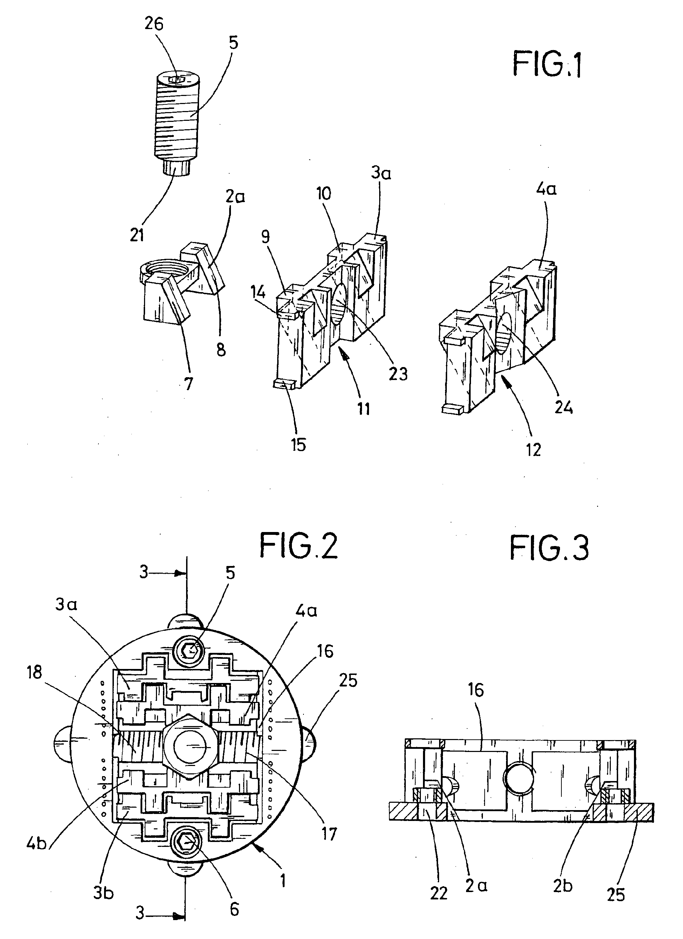

In den Zeichnungen ist mit 1 ein Adaptergehäuse bezeichnet, das an seiner Außenseite mit Riegelvorsprüngen 25 ausgerüstet ist, mit dem es innerhalb einer Hohlwelle festgelegt werden kann. Innerhalb dieses Adaptergehäuses sind verschiedene Bauteile angeordnet, die deutlicher in Fig. 1 dargestellt sind.

Hierbei ist darauf hinzuweisen, dass die nachfolgend erläuterten Bauteile jeweils auf beiden Seiten des festzulegenden Anschlussstückes angeordnet sind und somit mit a und b gekennzeichnet sind, wobei in der nachfolgenden Beschreibung dann weiterhin nur von den einfachen Zahlen ohne den Zusatz a bzw. b gesprochen wird.

So sind zwei Zugkeile 2a und 2b erforderlich, die innerhalb des Adaptergehäuses angeordnet sind und Keilflächen 7 und 8 aufweisen, die zum Inneren des Gehäuses hin gerichtet sind, während die gegenüberliegenden Flächen des Zugkeiles 2 gerade ausgebildet sind und sich an die Innenwand des Adaptergehäuses anlegen. Die Zugkeile 2 sind mit einer Gewindeausnehmung ausgerüstet, in die sich eine Zugschraube 5 bzw. 6 einschraubt, die mit Außengewinde versehen sind, wobei diese Zugschrauben 5 und 6, wie aus der Darstellung bei 26 erkennbar ist, eine Innenmehrkantausnehmung aufweisen und hierdurch betätigt werden könnten. Die Zugschrauben 5 und 6 greifen mit einem Vorsprung 21 in eine Lagerführung 22 des Adaptergehäuses ein und es ist erkennbar, dass im eingesetzten Zustand und bei Betätigung der Zugschraube 5 und 6 der eigentliche Zugkeil 2 nach oben hin angezogen werden kann.

Mit dem Zugkeil 2 arbeiten zwei Keilplatten 3a und 4a zusammen, wobei in dem Adaptergehäuse 1 weitere Keilplatten 3b und 4b vorgesehen sind.

Die Keilplatte 3 weist an ihrer zum Zugkeil hin gerichteten Seite zwei Keilvorsprünge 9 und 10 auf, die zur Anlage an die Keilflächen 7, 8 kommen und weist auf der anderen Seite keilförmige Ausnehmungen auf, in die Keile 9 und 10 der Keilplatte 4 eingreifen, so dass die beiden Keilplatten 3 und 4 über Keile ineinander eingeschachtelt sind. Wird nunmehr der Zugkeil nach oben angehoben, wird aufgrund der Keilwirkung die Keilplatte 3 horizontal nach vorne bewegt und wirkt dabei auf die in sie eingesetzte Keilplatte 4. Jede Keilplatte 3 oder 4 kann auch ohne die andere Keilplatte an den Zugkeil 2 angesetzt werden.

Zusätzlich sind in diesen Keilplatten 3 und 4 Bohrungen 23 und 24 vorgesehen, die auch dem Anschluß eines Querriegels des anzuschließenden Bauteiles dienen.

In der dem Zugkeil 2 abgewandten Seite sind in den Keilplatten 3 und 4 Aufnahmen 11 und 12 vorgesehen, wobei die Aufnahme 11 rechteckig ausgestaltet ist und die Aufnahme 12 winkelförmig. Auf diese Weise können sich die Aufnahmen 11 und 12 ideal an die festzulegenden Bauteile anpassen. Beide Keilplatten 3 und 4 weisen an ihren Seitenkanten Vorsprünge 14 und 15 auf, die mit Vorsprüngen 16 innerhalb des Adaptergehäuses in Verbindung kommen, so dass sie hier gehalten werden, was insbesondere für die Montage der Keilplatten von großer Bedeutung ist.

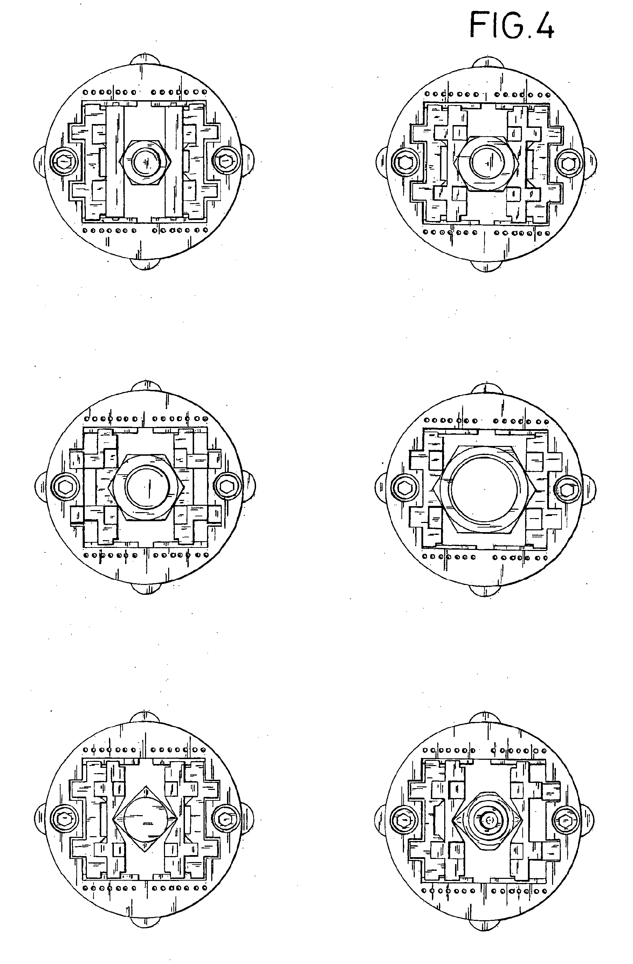

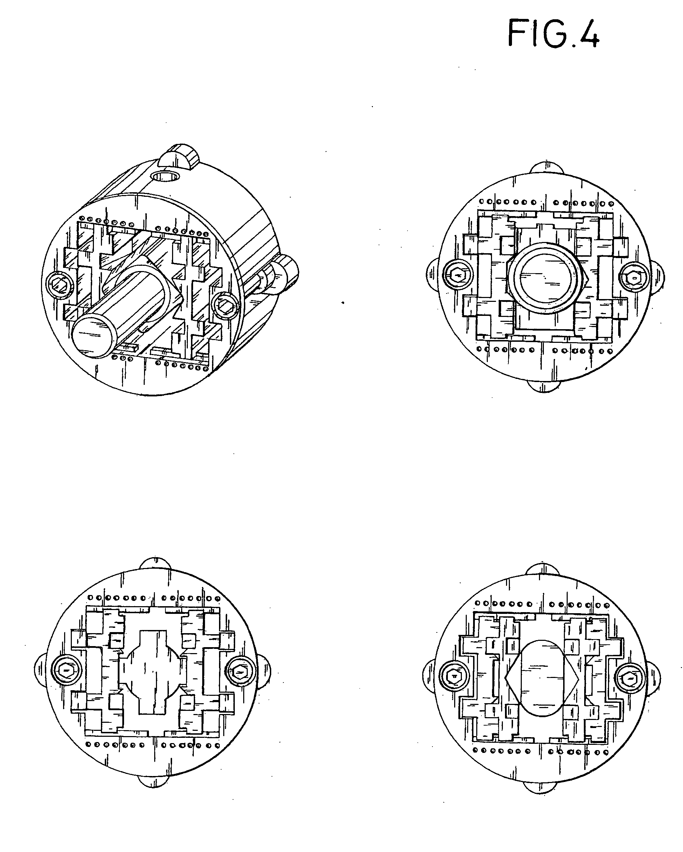

Fig. 4 zeigt, dass durch Einsatz der beiden Keilplatten auch sehr kleine beispielsweise Ventilspindeln umfasst werden können. Durch Entfernen einer Keilplatte wird es möglich, auch große Ventilspindeln bzw. auf den Ventilspindeln angeordnete Sechskantschrauben festzulegen und durch Einsatz der rechteckigen Aufnahme bzw. der winkelförmigen Aufnahme 11 bzw. 12 ist eine ideale Anpassung an die unterschiedlichen Spindelformen möglich.

## Patentansprüche

1. Universaladapter für den Einsatz an einer Hohlwelle zum Anschluss einer Ventilspindel und/oder eines Handrades und/oder eines Betätigungshebels in Verbindung mit einer Ventilverriegelung, **gekennzeichnet durch**
a) ein Adaptergehäuse (1), das an seiner Außenseite an die Innenseite einer Hohlwelle angepasst ist,
einander gegenüberliegend innerhalb des Adaptergehäuses,
b) je einen Zugkeil (2a, 2b), der jeweils **durch** eine Zugschraube (5, 6) in seiner Lage höhenverstellbar und fixierbar ist,
c) je zwei Keilplatten (3a, 3b, 4a, 4b), die auf ihrer dem Zugkeil (2) zugewandten Seite keilförmig ausgestaltet sind und derart mit dem Keil des Zugkeiles (2) zusammenwirken, dass bei dessen vertikaler Verschiebung sich die Keilplatten (3, 4) horizontal verschieben,
d) je eine Aufnahme (11, 12) in den Keilplatten (3, 4) auf der dem Zugkeil (2) abgewandten und dem anzuschlie-βenden Bauteil zugewandten Seite.

2. Universaladapter nach Anspruch 1, **dadurch gekennzeichnet, dass** die Aufnahmen (11, 12) unterschiedlich gestaltet sind.

3. Universaladapter nach Anspruch 1 oder 2, **dadurch gekennzeichnet, dass** die Keilplatten (3, 4) sich mit seitlichen Vorsprüngen (14, 15) auf Vorsprüngen (16) innerhalb des Adaptergehäuses (1) abstützen.

4. Universaladapter nach einem oder mehreren der vorhergehenden Ansprüche, **gekennzeichnet durch** zwei sich parallel zur Ebene der Keilplatten (3, 4) erstreckende Gewindestifte (17, 18), die auf das festzulegende Bauteil wirken können.

5. Universaladapter nach einem oder mehreren der vorhergehenden Ansprüche, **gekennzeichnet durch** an der Außenseite des Adaptergehäuses (1) angeordnete oder ausgeformte Riegelvorsprünge (25).

6. Universaladapter nach einem oder mehreren der vorhergehenden Ansprüche, **dadurch gekennzeichnet, dass** die Zugschrauben (5, 6) mit Innensechskantausnehmungen (26) ausgerüstet sind.

7. Universaladapter nach einem oder mehreren der vorhergehenden Ansprüche 1 bis 5, **dadurch gekennzeichnet, dass** die Gewindestifte (17, 18) mit Innensechskantausnehmungen ausgerüstet sind.

8. Universaladapter nach Anspruch 1, **dadurch gekennzeichnet, dass** die Zugschraube (5, 6) mit einem zylindrischen Vorsprung (21) in eine Lagerführung (22) des Adaptergehäuses (1) greift.

9. Universaladapter nach einem oder mehreren der vorhergehenden Ansprüche, **dadurch gekennzeichnet, dass** in den Keilplatten (3, 4) Bohrungen (23, 24) als zusätzliche Arretierungen vorgesehen sind.

## Claims

1. Universal adapter for use on a hollow shaft for connecting a valve spindle and/or a hand wheel and/or a control lever in combination with a valve locking system, **characterised by**
a) an adapter housing (1) whose outer side is adapted to the inside of a hollow shaft, positioned opposite one another within the adapter housing,
b) one drawing wedge (2a, 2b) on each side, each of which can be adjusted in height and fixed in position by a drawing bolt (5, 6),
c) two wedge plates (3a, 3b, 4a, 4b) each, which, on the side facing the drawing wedge (2), are wedge-shaped and interact with the wedge of the drawing wedge (2) in such a way that when it is moved vertically, the wedge plates (3, 4) are moved horizontally,
d) one retaining seat (11, 12) each in the wedge plates (3, 4) on the side facing away from the drawing wedge (2) and on the side facing towards the component being connected.

2. Universal adapter according to claim 1, **characterised in that** the retaining seats (11, 12) are differently formed.

3. Universal adapter according to claim 1 or claim 2, **characterised in that** the wedge plates (3, 4) are supported by lateral projections (14, 15) on projections (16) inside the adapter housing (1).

4. Universal adapter according to one or more of the preceding claims, **characterised by** two headless set screws (17, 18) extending parallel to the level of the wedge plates (3, 4) which can act on the component being connected.

5. Universal adapter according to one or more of the preceding claims, **characterised by** locking projections (25) arranged or formed on the outside of the adapter housing (1).

6. Universal adapter according to one or more of the preceding claims, **characterised in that** the drawing bolts (5, 6) are fitted with hexagon-socket recesses (26).

7. Universal adapter according to one or more of the preceding claims 1 to 5, **characterised in that** the set screws (17, 18) are fitted with hexagon-socket recesses.

8. Universal adapter according to claim 1, **characterised in that** a cylindrical projection (21) of the drawing bolt (5, 6) hooks into a bearing guide (22) of the adapter housing (1).

9. Universal adapter according to one or more of the preceding claims, **characterised in that** bores (23, 24) are provided in the wedge plates (3, 4) as additional locks.

## Revendications

1. Adaptateur universel destiné à la mise en oeuvre contre un arbre creux pour raccorder une broche de vanne et/ou un volant et/ou un levier d'actionnement en liaison avec un verrouillage de vanne, **caractérisé par** un
a) carter d'adaptateur (1) qui sur son côté extérieur a été adapté au côté intérieur d'un arbre creux et présente, se faisant face à l'intérieur du carter d'adaptateur,
b) deux cales de traction (2a, 2b), qui sont réglables chacune en hauteur sur leur position et immobilisables via une vis de traction (5, 6),
c) deux plaques de calage (3a, 3b, 4a, 4b) configurées cunéiformes sur leur côté tourné vers la cale de traction (2) et interagissant de telle sorte avec le coin de la cale de traction (2) que lors de son déplacement vertical les plaques de calage (3, 4) se déplacent horizontalement,
d) deux réceptacles (11,12) respectifs dans les plaques de calage (3, 4) sur le côté ne regardant pas la cale de traction (2) et sur le côté regardant le composant à raccorder.

2. Adaptateur universel selon la revendication 1, **caractérisé en ce que**, les réceptacles (11, 12) présentent des géométries différentes.

3. Adaptateur universel selon la revendication 1 ou 2, **caractérisé en ce que**, les plaques cunéiformes (3, 4) s'appuient par des saillies latérales (14, 15) sur les saillies (16) situées à l'intérieur du carter d'adaptateur (1).

4. Adaptateur universel selon une ou plusieurs des revendications précédentes, **caractérisé par** deux vis sans tête (17, 18) s'étendant parallèlement au plan des plaques de calage (3, 4) et pouvant agir sur le composant à immobiliser.

5. Adaptateur universel selon une ou plusieurs des revendications précédentes, **caractérisé par** des saillies bombées (25) agencées ou modelées contre le côté extérieur du carter d'adaptateur (1).

6. Adaptateur universel selon une ou plusieurs des revendications précédentes, **caractérisé en ce que** les vis de traction (5, 6) sont dotées de six pans creux (26).

7. Adaptateur universel selon une ou plusieurs des revendications 1 à 5, **caractérisé en ce que** les vis sans tête (17, 18) sont dotées de six pans creux.

8. Adaptateur universel selon la revendication 1, **caractérisé en ce que** la vis de traction (5, 6) pénètre par une saillie cylindrique (21) dans un guidage palier (22) du carter d'adaptateur (1).

9. Adaptateur universel selon l'une ou plusieurs des revendications précédentes, **caractérisé en ce que** dans les plaques de calage (3, 4) sont prévus des alésages (23, 24) officiant de moyens d'arrêt supplémentaires.
